# EUROPEAN PATENT APPLICATION

(11) **EP 4 410 620 A1**
(43) Date of publication of application: **07.08.2024**
(21) Application number: 22876387.6
(22) Date of filing: 28.09.2022
(51) Int. Cl.: B60W 30/06

(54) **PARKING ASSIST SYSTEM**

(30) Priority: 29.09.2021 JP 2021159567
(71) Applicant: AISIN CORPORATION, Kariya-shi, Aichi 448-8650 (JP)
(72) Inventor: KIYOKAWA, Yusuke, Tokyo 103-0022 (JP)
(74) Representative: TBK
(86) International application number: PCT/JP2022/036280
(87) International publication number: WO 2023/054521

(57) **Abstract**

A parking assist system includes: an obstacle detection unit configured to acquire obstacle information regarding an obstacle present around a vehicle; a parking-slot-entry path generation unit configured to set a target position in a parking area on the basis of the obstacle information, and generate a parking-slot-entry path for guiding the vehicle to the target position; and a traveling control unit configured to perform a process for causing the vehicle to travel on the basis of the parking-slot-entry path, in which the obstacle detection unit updates the obstacle information in accordance with movement of the vehicle, the parking-slot-entry path generation unit updates the target position in accordance with update of the obstacle information, a turning path generation unit generates a turning path for guiding the vehicle in a direction away from the parking area on the basis of the obstacle information when a predicted arrival position of the vehicle present on the parking-slot-entry path corresponding to the target position before update is determined to be closer to an obstacle than the target position after update by a predetermined value, and the traveling control unit performs a process for causing the vehicle to travel on the basis of the turning path when the turning path is generated.

## Description

### TECHNICAL FIELD

The present invention relates to a parking assist system.

### BACKGROUND ART

In recent years, there has been used a system that detects an obstacle present around a vehicle by using a sensor mounted on the vehicle and assists a parking operation of parking the vehicle in a parking area on the basis of a detection result.

### CITATIONS LIST

### PATENT LITERATURE

Patent Literature 1: JP 2021-62737 A

### SUMMARY OF INVENTION

### TECHNICAL PROBLEMS

However, since a detection range of the sensor is limited, accuracy of detecting an obstacle may not be sufficiently obtained. In such a case, during the parking operation performed automatically or semi-automatically by the system, the vehicle and the obstacle may excessively approach each other, causing an occupant to feel uneasiness.

Therefore, the present invention is to provide a parking assist system capable of reducing uneasiness of an occupant during a parking operation.

### SOLUTIONS TO PROBLEMS

A parking assist system according to an embodiment of the present invention includes: an obstacle detection unit configured to acquire obstacle information regarding an obstacle present around a vehicle; a parking-slot-entry path generation unit configured to set a target position in a parking area on the basis of the obstacle information, and generate a parking-slot-entry path for guiding the vehicle to the target position; and a traveling control unit configured to perform a process for causing the vehicle to travel on the basis of the parking-slot-entry path, in which the obstacle detection unit updates the obstacle information in accordance with movement of the vehicle, the parking-slot-entry path generation unit updates the target position in accordance with update of the obstacle information, a turning path generation unit generates a turning path for guiding the vehicle in a direction away from the parking area on the basis of the obstacle information when a predicted arrival position of the vehicle present on the parking-slot-entry path corresponding to the target position before update is determined to be closer to an obstacle than the target position after update by a predetermined value, and the traveling control unit performs a process for causing the vehicle to travel on the basis of the turning path when the turning path is generated.

According to the configuration described above, traveling based on the turning path is performed before the vehicle and the obstacle excessively approach each other. As a result, it is possible to reduce uneasiness of an occupant of the vehicle during the parking operation.

Further, the obstacle detection unit may include an ultrasonic sensor provided in front and rear of the vehicle, and generate the obstacle information on the basis of a detection result of the ultrasonic sensor.

As a result, even when a relatively inexpensive ultrasonic sensor is used, it is possible to construct a system with less uneasiness of the occupant.

Further, when the predicted arrival position is determined to be closer to an obstacle than the target position after update, the turning path generation unit may generate the turning path having a start point at a position at which the vehicle arrives after traveling a predetermined distance along the parking-slot-entry path from a current position. Moreover, the predetermined distance may be greater than or equal to 50 cm.

As a result, it is possible to alleviate an impact when traveling based on the parking-slot-entry path is switched to traveling based on the turning path.

### BRIEF DESCRIPTION OF DRAWINGS

FIG. 1 is a plan view illustrating an example of a configuration of a vehicle according to an embodiment.
FIG. 2 is a block diagram illustrating an example of a hardware configuration of a parking assist system according to the embodiment.
FIG. 3 is a block diagram illustrating an example of a functional configuration of the parking assist system according to the embodiment.
FIG. 4 is a view illustrating an example of a parking-slot-entry path.
FIG. 5 is a view illustrating an example of a turning path.
FIG. 6 is a view illustrating an example of a target position to be set when an angle formed by an own-vehicle direction and another-vehicle direction is not a right angle.
FIG. 7 is a view illustrating an example of an estimated shape of another vehicle when an angle formed by an own-vehicle direction and another-vehicle direction is not a right angle.
FIG. 8 is a view illustrating an example of a change in a parking area and a target position according to progress of a parking operation.
FIG. 9 is a view illustrating an example of a situation in which the turning path is generated in the embodiment.
FIG. 10 is a view illustrating an example of the turning path and an allowance stop position according to the embodiment.
FIG. 11 is a flowchart illustrating an example of a process in the parking assist system according to the embodiment.

### DESCRIPTION OF EMBODIMENTS

Hereinafter, an exemplary embodiment of the present invention will be disclosed. The configurations of the embodiment shown below, as well as the actions, results, and effects produced by such configurations, are examples. The present invention can be realized by configurations other than those disclosed in the following embodiment, and at least one of various effects based on the basic configuration and derivative effects can be obtained.

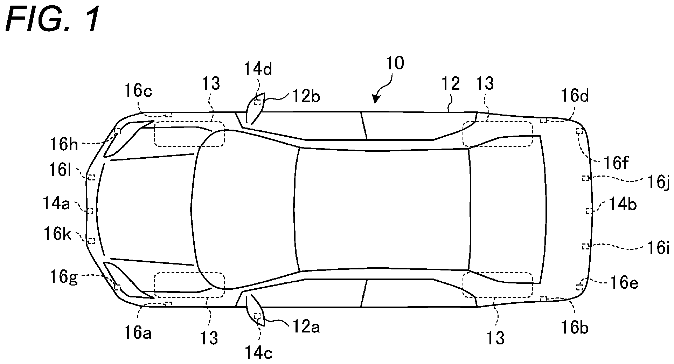

FIG. 1 is a plan view illustrating an example of a configuration of a vehicle 10 according to an embodiment. The vehicle 10 is an example of a mobile object on which a parking assist system according to the present embodiment is mounted. The vehicle 10 may be, for example, an automobile (an internal combustion engine automobile) using an internal combustion engine as a drive source, may be an automobile (an electric vehicle, a fuel cell vehicle, or the like) using an electric motor as a drive source, or may be an automobile (hybrid automobile) using both of them as a driving source. The vehicle 10 can be mounted with various devices (systems, components, and the like) necessary for driving the internal combustion engine and the electric motor. A type, the number, a layout, and the like of devices related to driving of a wheel 13 in the vehicle 10 can be appropriately set.

The vehicle 10 according to the present embodiment includes a vehicle body 12, the wheel 13, a plurality of (four in the present embodiment) imaging devices 14a, 14b, 14c, and 14d, and a plurality of (12 in the present embodiment) ultrasonic sensors 16a, 16b, 16c, 16d, 16e, 16f, 16g, 16h, 16i, 16j, 16k, and 161. Hereinafter, the imaging devices 14a, 14b, 14c, and 14d will be referred to as imaging devices 14 when it is not necessary to distinguish from each other. The ultrasonic sensors 16a, 16b, 16c, 16d, 16e, 16f, 16g, 16h, 16i, 16j, 16k, and 161 are referred to as ultrasonic sensors 16 when it is not necessary to distinguish from each other.

The vehicle body 12 constitutes a vehicle compartment in which an occupant rides. The vehicle body 12 accommodates or holds the wheel 13, the imaging devices 14, the ultrasonic sensors 16, and the like.

The imaging device 14 is, for example, a digital camera incorporating an imaging element such as a charge coupled device (CCD) or a CMOS image sensor (CIS). The imaging device 14 outputs, as imaging data, data of a still image or a moving image including a plurality of frame images generated at a predetermined frame rate. Each of the imaging devices 14 has a wide-angle lens or a fisheye lens, and can capture an image of, for example, a range of 140° to 190° in a horizontal direction. An optical axis of the imaging device 14 is set to be obliquely downward. Therefore, the imaging device 14 outputs image data of a captured image obtained by imaging a periphery of the vehicle 10 including a peripheral road surface.

The imaging device 14 is provided on an outer peripheral portion of the vehicle body 12. For example, the imaging device 14a is provided at a central portion (for example, a front grill) of a front end portion of the vehicle body 12 in a left-right direction. The imaging device 14a generates a captured image obtained by imaging surroundings in front of the vehicle 10. The imaging device 14b is provided at a central portion (for example, around a back door switch) in a left-right direction of a rear end portion of the vehicle body 12. The imaging device 14b generates a captured image obtained by imaging surroundings behind the vehicle 10. The imaging device 14c is provided at a central portion (for example, a left side mirror 12a) in a front-rear direction of a left end portion of the vehicle body 12. The imaging device 14c generates a captured image obtained by imaging surroundings on a left side from the vehicle 10. The imaging device 14d is provided at a central portion (for example, a right side mirror 12b) in a front-rear direction of a right end portion of the vehicle body 12. The imaging device 14d generates a captured image obtained by imaging surroundings on a right side from the vehicle 10.

The ultrasonic sensor 16 is an example of a distance measuring sensor that measures a distance from the vehicle 10 to an obstacle. The ultrasonic sensor 16 is, for example, a sensor that is provided on an outer peripheral portion of the vehicle 10, transmits an ultrasonic wave as a detection wave, and receives a reflected wave reflected by an object present around the vehicle 10. The ultrasonic sensor 16 acquires distance information indicating a distance from the vehicle 10 to an obstacle present around the vehicle 10. For example, the ultrasonic sensor 16 acquires time (time of flight (TOF)) from transmission of the detection wave to reception of the reflected wave, as distance information for specifying the presence or absence, a distance, a position, movement, and the like of the object.

The ultrasonic sensors 16a, 16b, 16c, and 16d are also called side sonars, and are provided on the left and right side portions of the vehicle 10. The ultrasonic sensors 16e and 16f are also called corner sonars, and are provided at a rear portion of the vehicle 10 (for example, a corner portion of the vehicle 10) with respect to the ultrasonic sensors 16a, 16b, 16c, and 16d, and directed rearward (for example, toward a rear outer side) with respect to the ultrasonic sensors 16a, 16b, 16c, and 16d. The ultrasonic sensors 16g and 16h are also called corner sonars, and are provided at a front portion of the vehicle 10 (for example, a corner portion of the vehicle 10) with respect to the ultrasonic sensors 16a, 16b, 16c, and 16d, and directed forward (for example, toward a front outer side) with respect to the ultrasonic sensors 16a, 16b, 16c, and 16d. The ultrasonic sensors 16i and 16j are also called rear sonars, and are provided at a rear end portion of the vehicle 10. The ultrasonic sensors 16k and 16l are also called front sonars, and are provided at a front end portion of the vehicle 10.

The ultrasonic sensors 16a, 16b, 16c, and 16d acquire distance information regarding an object present on a side surface portion of the vehicle 10. The ultrasonic sensors 16g, 16k, 16i, and 16h acquire distance information regarding an object present on a front side from the vehicle 10. The ultrasonic sensors 1616e, 16i, 16j, and 16f acquire distance information regarding an object present on a rear side from the vehicle 10.

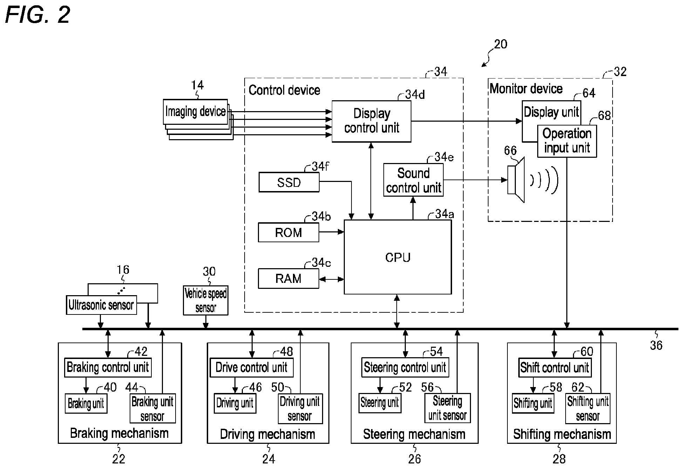

FIG. 2 is a block diagram illustrating an example of a hardware configuration of a parking assist system 20 according to the embodiment. The parking assist system 20 is mounted on the vehicle 10, and performs various processes for assisting a parking operation of parking the vehicle 10 in a parking area.

The parking assist system 20 according to the present embodiment includes the imaging device 14, the ultrasonic sensor 16, a braking mechanism 22, a driving mechanism 24, a steering mechanism 26, a shifting mechanism 28, a vehicle speed sensor 30, a monitor device 32, a control device 34, and an in-vehicle network 36.

The braking mechanism 22 is a mechanism that decelerates the vehicle 10. The braking mechanism 22 includes a braking unit 40, a braking control unit 42, and a braking unit sensor 44. The braking unit 40 includes, for example, a brake disc, a brake pad, a brake pedal, a link mechanism, and the like, and generates a force for decelerating the vehicle 10. The braking control unit 42 is, for example, an electronic control unit including a central processing unit (CPU) and the like, and controls the braking unit 40 on the basis of an instruction signal from the control device 34. The braking unit sensor 44 is, for example, a position sensor or the like, detects a position of the brake pedal or the like, and outputs a detection result to the control device 34 via the in-vehicle network 36.

The driving mechanism 24 is a mechanism that drives (accelerates) the vehicle 10. The driving mechanism 24 includes a driving unit 46, a drive control unit 48, and a driving unit sensor 50. The driving unit 46 includes, for example, an internal combustion engine, an electric motor, an accelerator pedal, a link mechanism, and the like, and generates a force for accelerating the vehicle 10. The drive control unit 48 is, for example, an electronic control unit including a CPU and the like, and controls the driving unit 46 on the basis of an instruction signal from the control device 34. The driving unit sensor 50 is, for example, a position sensor or the like, detects a position of the accelerator pedal or the like, and outputs a detection result to the control device 34 via the in-vehicle network 36.

The steering mechanism 26 is a mechanism that changes a traveling direction of the vehicle 10. The steering mechanism 26 includes a steering unit 52, a steering control unit 54, and a steering unit sensor 56. The steering unit 52 includes, for example, a steering wheel, a power steering device, a steering assist motor, a link mechanism, and the like, and changes a steered wheel (a traveling direction) of the vehicle 10. The steering control unit 54 is, for example, an electronic control unit including a CPU and the like, and controls the steering unit 52 on the basis of an instruction signal from the control device 34. The steering unit sensor 56 is, for example, an angle sensor including a Hall element and the like, detects a rotation angle or the like of the steering wheel, and outputs a detection result to the control device 34 via the in-vehicle network 36.

The shifting mechanism 28 is a mechanism that changes output torque and a rotation direction of the driving unit 46 (the internal combustion engine, the electric motor, and the like) and transmits the output torque and rotation direction to the wheel 13. The shifting mechanism 28 includes a shifting unit 58, a shift control unit 60, and a shifting unit sensor 62. The shifting unit 58 includes, for example, an automatic transmission device, a shift lever, a link mechanism, and the like, and changes a shift ratio and a rotation direction of the wheel 13. The shift control unit 60 is, for example, an electronic control unit including a CPU and the like, and controls the shifting unit 58 on the basis of an instruction signal from the control device 34. The shifting unit sensor 62 is, for example, a position sensor or the like, detects a position of the shift lever or the like, and outputs a detection result to the control device 34 via the in-vehicle network 36.

The vehicle speed sensor 30 is configured using, for example, a Hall element and the like provided in the vicinity of the wheel 13, and detects a rotation amount, a rotation speed per unit time, and the like of the wheel 13. On the basis of a detection result of the vehicle speed sensor 30, a speed of the vehicle 10 can be calculated.

The monitor device 32 is installed on an instrument panel, a dashboard, or the like inside the vehicle compartment of the vehicle 10, and includes a display unit 64, a sound output unit 66, and an operation input unit 68. The display unit 64 displays an image on the basis of image data transmitted by the control device 34. The display unit 64 is, for example, a display device such as a liquid crystal display (LCD) or an organic electroluminescent display (OELD). The display unit 64 may display, for example, an image for receiving an operation or the like instructing execution or stop of a parking assist function, a parking-slot-exit assist function, and the like. The sound output unit 66 outputs sound on the basis of sound data transmitted by the control device 34. The sound output unit 66 may output, for example, sound related to the parking assist function, the parking-slot-exit assist function, and the like. The operation input unit 68 is a unit that receives an input from an occupant, and can be configured using, for example, a touch panel, a switch, a microphone, or the like. The operation input unit 68 may be configured to be capable of inputting an instruction from the occupant regarding the parking assist function, the parking-slot-exit assist function, and the like.

The control device 34 is an electronic control unit that executes various types of calculation processing and control processing for realizing various functions of the vehicle 10. The control device 34 includes a CPU 34a, a read only memory (ROM) 34b, a random access memory (RAM) 34c, a display control unit 34d, a sound control unit 34e, and a solid state drive (SSD) 34f.

The CPU 34a executes various types of calculation processing and control processing in accordance with a program stored in the ROM 34b, the SSD 34f, and the like. The ROM 34b stores a program, parameters necessary for executing the program, and the like. The RAM 34c temporarily stores various types of data to be used in the calculation in the CPU 34a, and functions as a work area of the CPU 34a. The SSD 34f is a rewritable large-capacity nonvolatile storage device, and holds image data acquired by the imaging device 14, distance information acquired by the ultrasonic sensor 16, various calculation results acquired by the CPU 34a, and the like. The CPU 34a executes, for example, a process for realizing automatic driving control of the vehicle 10. The automatic driving control according to the present embodiment includes parking assist control for automatically or semi-automatically performing a parking operation of parking the vehicle 10 in a parking area.

Among the processing in the control device 34, the display control unit 34d mainly executes processing on image data acquired by the imaging device 14, generation processing of display image data to be displayed on the display unit 64, and the like. Among the processing in the control device 34, the sound control unit 34e mainly executes generation processing or the like of sound to be output by the sound output unit 66.

The in-vehicle network 36 includes, for example, a controller area network (CAN), a local interconnect network (LIN), and the like. The in-vehicle network 36 mutually communicably connects the driving mechanism 24, the braking mechanism 22, the steering mechanism 26, the shifting mechanism 28, the ultrasonic sensor 16, the vehicle speed sensor 30, the operation input unit 68 of the monitor device 32, the control device 34, and the like.

Note that the hardware configuration of the parking assist system 20 is not limited to that described above, and should be appropriately designed in accordance with a form of the vehicle 10 and the like. For example, in FIG. 2, a configuration is exemplified in which one control device 34 executes various processes for realizing various functions of the vehicle 10, but a plurality of control devices may be configured to realize various functions by performing processing in cooperation.

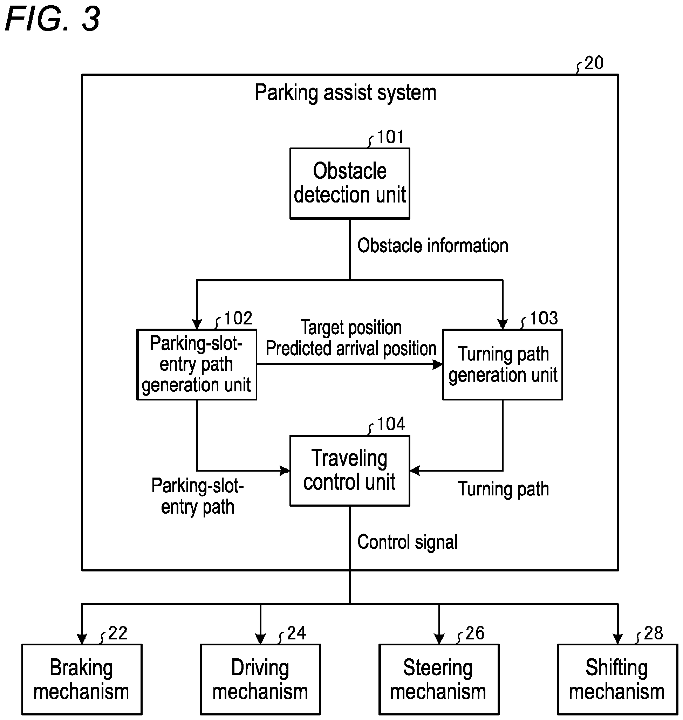

FIG. 3 is a block diagram illustrating an example of a functional configuration of the parking assist system 20 according to the embodiment. The parking assist system 20 according to the present embodiment includes an obstacle detection unit 101, a parking-slot-entry path generation unit 102, a turning path generation unit 103, and a traveling control unit 104. These functional components 101 to 104 can be configured by cooperation of, for example, pieces of hardware as illustrated in FIG. 2 and software (such as a program for controlling the CPU 34a) for controlling these pieces of hardware.

The obstacle detection unit 101 acquires obstacle information regarding an obstacle present around the vehicle 10. The obstacle detection unit 101 generates obstacle information regarding an obstacle such as another vehicle present around the vehicle 10, on the basis of distance information (for example, time of flight (TOF)), relative speed information (for example, a Doppler frequency), and the like acquired by the ultrasonic sensor 16, for example. The obstacle information may include, for example, a distance from the vehicle 10 to the obstacle, a shape of the obstacle, a relative speed between the vehicle 10 and the obstacle, and the like. The obstacle detection unit 101 updates the obstacle information in accordance with movement of the vehicle 10. The obstacle information may be updated at a predetermined time period.

The parking-slot-entry path generation unit 102 sets a target position in a parking area on the basis of the obstacle information, and generate a parking-slot-entry path for guiding the vehicle 10 to the target position. The parking-slot-entry path generation unit 102 updates the target position and the parking-slot-entry path in accordance with update of the obstacle information.

The turning path generation unit 103 generates a turning path for guiding the vehicle 10 in a direction away from the parking area on the basis of the obstacle information. The turning path generation unit 103 according to the present embodiment generates the turning path when a predicted arrival position of the vehicle 10 present on the parking-slot-entry path corresponding to the target position before update is closer to an obstacle than the target position after update.

The traveling control unit 104 performs a process for causing the vehicle 10 to travel on the basis of the parking-slot-entry path in a case where no turning path is generated, and performs a process for causing the vehicle 10 to travel on the basis of the turning path in a case where the turning path is generated. The "process for causing the vehicle 10 to travel" herein may be, for example, both automatic steering control and automatic acceleration/deceleration control, or only the automatic steering control. The traveling control unit 104 according to the present embodiment outputs a control signal to at least one of the braking mechanism 22, the driving mechanism 24, the steering mechanism 26, or the shifting mechanism 28.

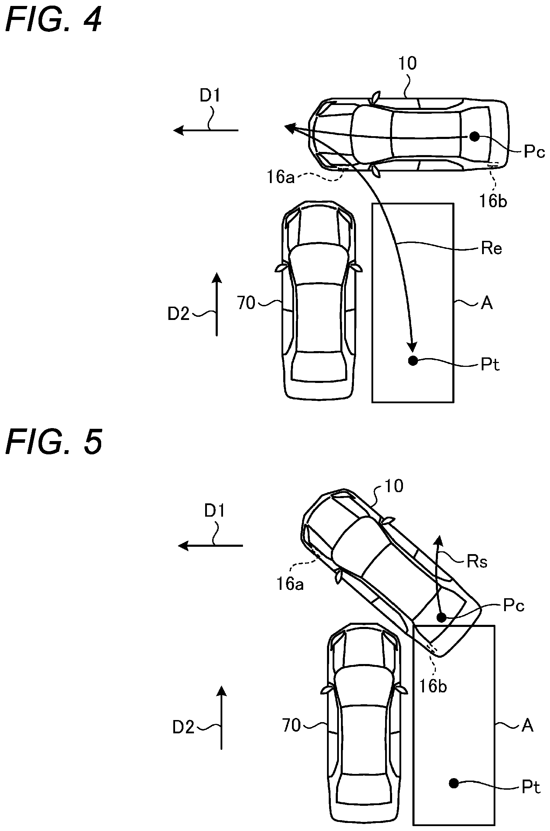

FIG. 4 is a view illustrating an example of a parking-slot-entry path Re. As illustrated in FIG. 4, the parking-slot-entry path Re is a path for guiding the vehicle 10 from a current position Pc (here, a central portion of a line connecting rear wheels) to a target position Pt set in a parking area A.

FIG. 5 is a view illustrating an example of a turning path Rs. As illustrated in FIG. 5, the turning path Rs is a path for guiding the vehicle 10 from the current position Pc in a direction away from the parking area A (the target position Pt).

In the example illustrated in FIGS. 4 and 5, a shape of another vehicle 70 as an example of the obstacle is estimated on the basis of detection results of the ultrasonic sensors 16a and 16b installed on a left side surface of the vehicle 10, and the target position Pt (the parking area A) is set on the basis of the estimation result. At this time, since detection accuracy of the ultrasonic sensors 16a and 16b decreases as the distance increases, it is difficult to estimate a shape of a rear portion of the another vehicle 70. Therefore, the shape of the another vehicle 70 is usually assumed to be extending perpendicularly to a front-rear direction of the vehicle 10.

Here, in the example illustrated in FIG. 4, an angle formed by an own-vehicle direction D1 which is the front-rear direction of the vehicle 10 before a start of the parking operation and an another-vehicle direction D2 which is a front-rear direction of the another vehicle 70 is a substantially right angle. In such a case, even if the ultrasonic sensors 16a and 16b cannot acquire information regarding the shape of the rear portion of the another vehicle 70, the shape of the another vehicle 70 can be estimated relatively accurately, and the target position Pt can be appropriately set.

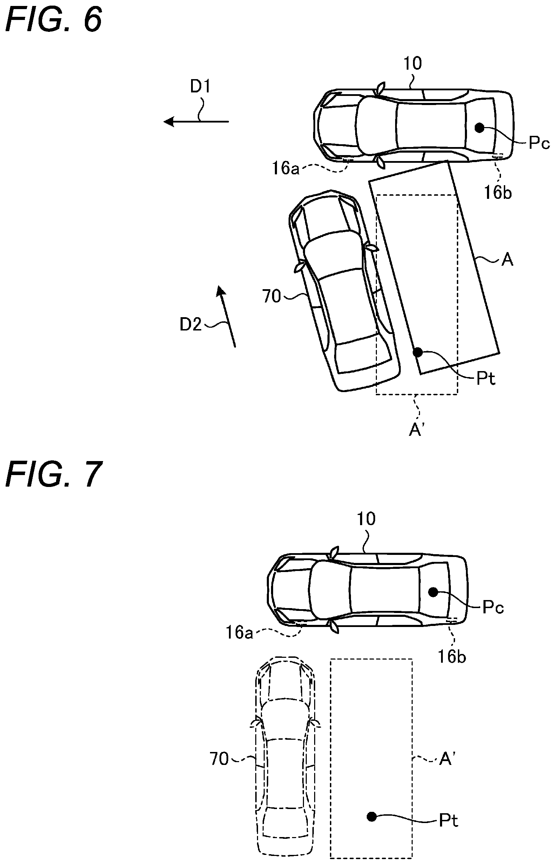

However, when the angle formed by the own-vehicle direction D1 and the another-vehicle direction D2 is not a right angle, the shape of the another vehicle 70 cannot be accurately estimated, and the target position Pt may not be appropriately set. Such a problem will be described below with reference to FIGS. 6 and 7.

FIG. 6 is a view illustrating an example of the target position Pt set when the angle formed by the own-vehicle direction D1 and the another-vehicle direction D2 is not a right angle. FIG. 7 is a view illustrating an example of an estimated shape 70' of the another vehicle 70 when the angle formed by the own-vehicle direction D1 and the another-vehicle direction D2 is not a right angle.

In the parking area A, a longitudinal direction thereof should be set to be parallel to the another-vehicle direction D2. Therefore, as illustrated in FIG. 6, when the angle formed by the own-vehicle direction D1 and the another-vehicle direction D2 is not a right angle, an appropriate longitudinal direction of the parking area A is angled with respect to the own-vehicle direction D1. However, when it is difficult to acquire obstacle information (distance information or the like) regarding the rear portion of the another vehicle 70 due to a limit of a detection range of the ultrasonic sensors 16a and 16b, the another vehicle 70 is estimated to be extending in a direction perpendicular to the own-vehicle direction D 1. That is, the shape of the another vehicle 7 is erroneously recognized to be the estimated shape 70' as illustrated in FIG. 7. A longitudinal direction of a parking area A' set on the basis of such the estimated shape 70' is parallel to the longitudinal direction of the estimated shape 70', that is, a direction perpendicular to the own-vehicle direction D1. Then, when the target position Pt is set on the basis of such a parking area A', and the parking-slot-entry path Re (see FIG. 4) is generated on the basis of the target position Pt, there is a possibility that the vehicle 10 and the another vehicle 70 excessively approach each other.

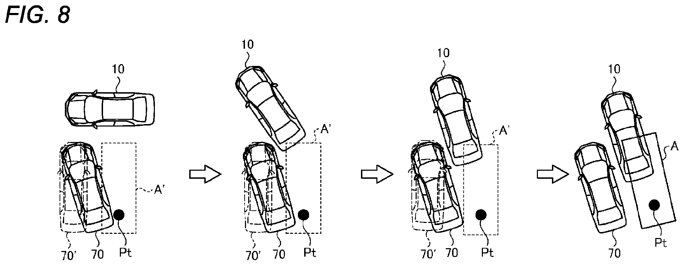

The problem caused by the erroneous recognition of the estimated shape 70' as described above is gradually corrected as the parking operation for the vehicle 10 progresses and the distance between the vehicle 10 and the another vehicle 70 decreases. FIG. 8 is a view illustrating an example of a change in the parking areas A' and A and the target position Pt according to progress of the parking operation. As illustrated in FIG. 8, as the parking operation for the vehicle 10 progresses, the estimated shape 70' gradually approaches an actual shape of the another vehicle 70, and the parking areas A' and A and the target position Pt are appropriately set. As a result, the parking-slot-entry path Re (see FIG. 4) is gradually and appropriately corrected.

However, in the process of correcting the parking-slot-entry path Re as described above, the vehicle 10 and the another vehicle 70 may excessively approach each other, causing an occupant of the vehicle 10 to feel uneasiness. In order to solve such a problem, the parking assist system 20 according to the present embodiment includes a means to generate the turning path Rs in an early stage.

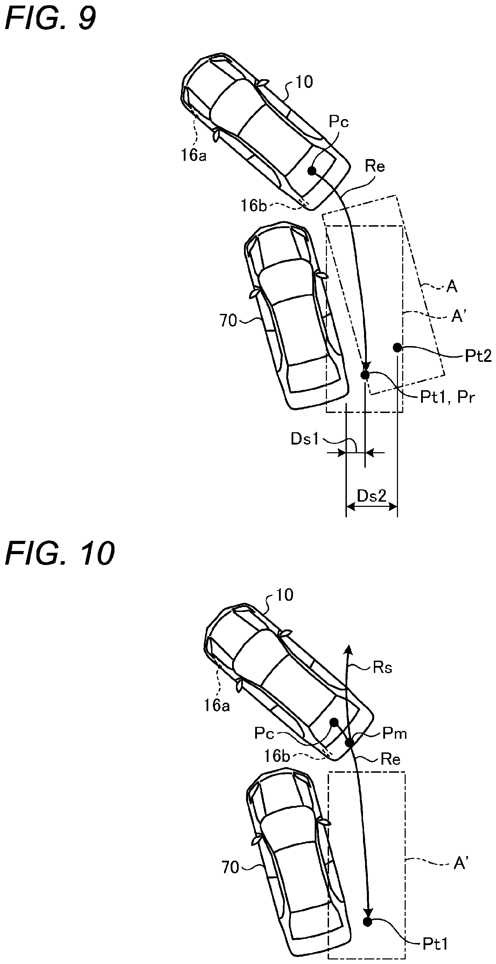

FIG. 9 is a view illustrating an example of a situation in which the turning path Rs is generated in the embodiment. The turning path generation unit 103 (see FIG. 3) according to the present embodiment generates the turning path Rs when a predicted arrival position Pr of the vehicle 10 present on the parking-slot-entry path Re corresponding to a target position Pt1 before update is closer to the another vehicle 70 than a target position Pt2 after update. FIG. 9 illustrates that a distance Ds1 between the predicted arrival position Pr and the another vehicle 70 is smaller than a distance Ds2 between the target position Pt2 before update and the another vehicle 70. Note that, although FIG. 9 illustrates an example in which the predicted arrival position Pr coincides with the target position Pt1 before the update, the predicted arrival position Pr is not limited thereto, and may be any position as long as the predicted arrival position Pr is present on the parking-slot-entry path Re.

The process described above enables the turning path Rs to be generated before the vehicle 10 and the another vehicle 70 excessively approach each other, and makes it possible to avoid causing the occupant of the vehicle 10 to feel uneasiness during the parking operation.

In addition, the parking assist system 20 according to the present embodiment includes a means to alleviate an impact when traveling based on the parking-slot-entry path Re is switched to traveling based on the turning path Rs.

FIG. 10 is a view illustrating an example of the turning path Rs and an allowance stop position Pm according to the embodiment. When the predicted arrival position Pr is determined to be closer to the another vehicle 70 than the target position Pt2 after update as described above, the turning path generation unit 103 according to the present embodiment generates the turning path Rs having a start point at a position (the allowance stop position Pm) where the vehicle 10 arrives after traveling a predetermined distance along the parking-slot-entry path Re from the current position Pc. That is, when the predicted arrival position Pr is determined to be closer to the another vehicle 70 than the target position Pt2 after update when the vehicle 10 is at the current position Pc, the turning path Rs is generated such that the allowance stop position Pm away from the current position Pc by a predetermined distance is a start point. The predetermined distance is preferably greater than or equal to 50 cm. Such a process makes it possible to alleviate an impact when traveling based on the parking-slot-entry path Re is switched to traveling based on the turning path Rs.

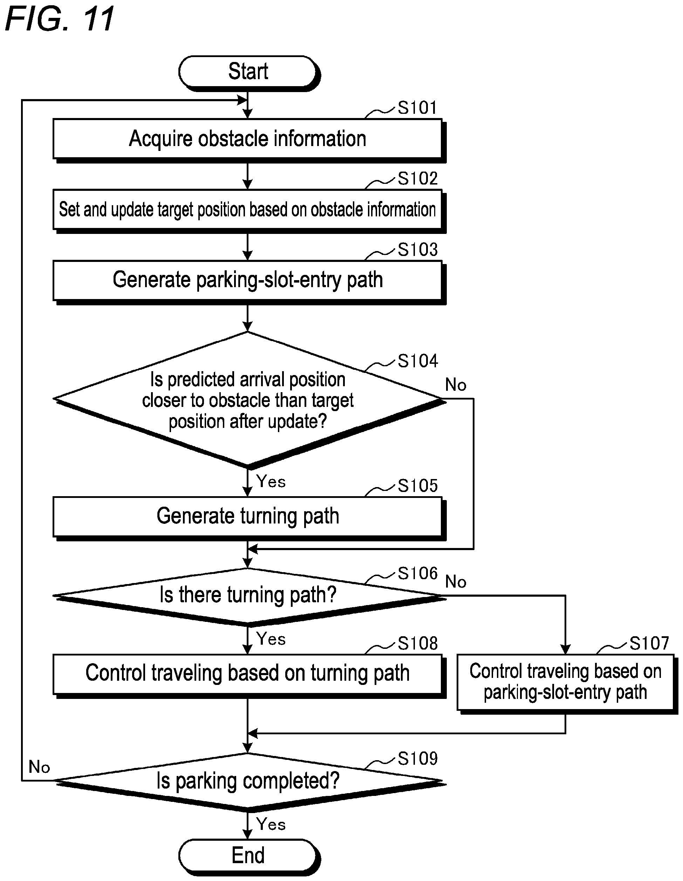

FIG. 11 is a flowchart illustrating an example of a process in the parking assist system 20 according to the embodiment. When the obstacle detection unit 101 acquires obstacle information (S101), the parking-slot-entry path generation unit 102 sets or updates the target position Pt on the basis of the obstacle information (S102), and generates the parking-slot-entry path Re on the basis of the target position Pt (S103).

Thereafter, the turning path generation unit 103 determines whether or not the predicted arrival position Pr present on the parking-slot-entry path Re corresponding to the target position Pt1 before update is closer to an obstacle (the another vehicle 70 or the like) than the target position Pt2 after update (S 104). If the predicted arrival position Pr is closer to the obstacle than the target position Pt2 after update (S104: Yes), the turning path generation unit 103 generates the turning path Rs (S 105). Thereafter, the traveling control unit 104 determines whether or not there is the turning path Rs (S 106). Whereas, if the predicted arrival position Pr is not closer to the obstacle than the target position Pt2 after update (S104: No), step S106 is executed without generating the turning path Rs.

If there is no turning path Rs (S106: No), the traveling control unit 104 controls traveling of the vehicle 10 on the basis of the parking-slot-entry path Re (S 107). Whereas, if there is the turning path Rs (S106: Yes), the traveling control unit 104 controls the vehicle 10 on the basis of the turning path Rs (S 108). After execution of step S 107 or step S 108, the traveling control unit 104 determines whether or not the parking operation is completed (S 109). This routine is ended if the parking operation is completed (S109: Yes), and step S101 is executed again if the parking operation is not completed (S109: No).

As described above, according to the present embodiment, traveling based on the turning path Rs is performed before the vehicle 10 and an obstacle (the another vehicle 70 or the like) excessively approach each other. As a result, it is possible to reduce uneasiness of the occupant of the vehicle 10 during the parking operation performed automatically or semi-automatically.

A program for causing a computer (the control device 34 or the like) to execute a process for realizing the parking assist as described above may be provided as a computer program product by being stored as a file in an installable format or an executable format, in a computer-readable storage medium such as a CD-ROM, a CD-R, a memory card, a digital versatile disk (DVD), or a flexible disk (FD). In addition, the program may be provided by being stored on a computer connected to a network such as the Internet and downloaded via the network. Furthermore, the program may be provided or distributed via a network such as the Internet.

Although the embodiment of the present invention has been described above, the embodiment described above has been presented as examples, and is not intended to limit the scope of the invention. This novel embodiment can be implemented in various other forms, and various omissions, substitutions, and changes can be made without departing from the gist of the invention. This embodiment and modifications thereof are included in the scope and gist of the invention, and are included in the invention described in the claims and the equivalent scope thereof.

### REFERENCE SIGNS LIST

10: Vehicle, 12: Vehicle body, 13: Wheel, 14 (14a to 14d): Imaging device, 16 (16a to 16l): Ultrasonic sensor, 20: Parking assist system, 22: Braking mechanism, 24: Driving mechanism, 26: Steering mechanism, 28: Shifting mechanism, 30: Vehicle speed sensor, 32: Monitor device, 34: Control device, 70: Another vehicle, 70': Estimated shape, 101: Obstacle detection unit, 102: Parking-slot-entry path generation unit, 103: Turning path generation unit, 104: Traveling control unit, A, A': Parking area, Pc: Current position, Pt, Pt1, Pt2: Target position, Re: Parking-slot-entry path, and Rs: Turning path

## Claims

1. A parking assist system comprising:
an obstacle detection unit configured to acquire obstacle information regarding an obstacle present around a vehicle;
a parking-slot-entry path generation unit configured to set a target position in a parking area based on the obstacle information, and generate a parking-slot-entry path for guiding the vehicle to the target position; and
a traveling control unit configured to perform a process for causing the vehicle to travel based on the parking-slot-entry path, wherein
the obstacle detection unit updates the obstacle information in accordance with movement of the vehicle,
the parking-slot-entry path generation unit updates the target position in accordance with update of the obstacle information,
a turning path generation unit generates a turning path for guiding the vehicle in a direction away from the parking area based on the obstacle information when a predicted arrival position of the vehicle present on the parking-slot-entry path corresponding to the target position before update is determined to be closer to an obstacle than the target position after update by a predetermined value, and
the traveling control unit performs a process for causing the vehicle to travel based on the turning path when the turning path is generated.

2. The parking assist system according to claim 1, wherein
the obstacle detection unit includes an ultrasonic sensor provided in front and rear of the vehicle, and generates the obstacle information based on a detection result of the ultrasonic sensor.

3. The parking assist system according to claim 1 or 2, wherein
when the predicted arrival position is determined to be closer to an obstacle than the target position after update, the turning path generation unit generates the turning path having a start point at a position at which the vehicle arrives after traveling a predetermined distance along the parking-slot-entry path from a current position.

4. The parking assist system according to claim 3, wherein
the predetermined distance is greater than or equal to 50 cm.
